# FASCICULE DE BREVET EUROPEEN

(11) **EP 3 831 659 B1**
(45) Date de publication et mention de la délivrance du brevet: **01.05.2024**
(21) Numéro de dépôt: 20210998.9
(22) Date de dépôt: 01.12.2020
(51) Int. Cl.: B60R 11/02, B60N 3/00, B60N 3/10, B61D 33/00, B60N 2/90, B64D 11/06, B60R 11/00, B60N 2/01, B60R 1/00

(54) **ENSEMBLE DE FIXATION DE MODULES ET SIÈGE DE TRANSPORT DE VOYAGEURS MUNI D'UN TEL ENSEMBLE SUR SA FACE ARRIÈRE**
BAUGRUPPE ZUR BEFESTIGUNG VON MODULEN UND PASSAGIERTRANSPORTSITZ, DER MIT EINER SOLCHEN BAUGRUPPE AN SEINER RÜCKSEITE VERSEHEN IST
ASSEMBLY FOR ATTACHING PASSENGER TRANSPORT MODULES AND SEAT PROVIDED WITH SUCH AN ASSEMBLY ON THE REAR SURFACE THEREOF

(30) Priorité: 02.12.2019 FR 1913600
(43) Date de publication de la demande: 09.06.2021
(73) Titulaire: SNCF Voyageurs, 93200 Saint-Denis (FR)
(72) Inventeur: Dumortier, Robert, 72000 Le Mans (FR); Dumortier, Anne-Laure, 72000 Le Mans (FR)
(74) Mandataire: Fache, Sébastien

(56) Documents cités:
- FR-A1- 2 982 548
- US-A1- 2005 092 801
- US-A1- 2005 133 557

## Description

### DOMAINE TECHNIQUE DE L'INVENTION

Le domaine technique de l'invention est celui des ensembles de fixation, en particulier montés sur la face arrière des sièges de transport de voyageurs en assurant le montage de modules amovibles au voyageur installé sur le siège adjacent arrière.

La présente invention concerne un ensemble de fixation, un mobilier comportant un tel ensemble de fixation, un siège de transport de voyageurs muni d'un tel ensemble et un ensemble de deux sièges de transport adjacents.

### ARRIERE-PLAN TECHNOLOGIQUE DE L'INVENTION

Les sièges connus de transport de voyageurs, par exemple du secteur ferroviaire, comportent généralement un agencement de tablette mobile entre une position rangée contre la face arrière du siège et une position déployée. Ils comportent également souvent un filet de rangement au niveau de la face arrière de l'appui tête ainsi qu'un porte gobelet. Mais ces agencements sont montés à la fabrication du siège ce qui interdit toute évolution pendant la durée de vie du siège, à moins de réaliser des modifications structurelles coûteuses.

La publication GB2474139 décrit un ensemble de fixation qui est monté au niveau de la face arrière d'un appui tête de siège de véhicule et qui est composé d'un rail de fixation solidarisé à l'enveloppe externe de l'appui tête. Le rail comporte deux zones de guidage parallèles des objets destinés à être montés dans l'ensemble de fixation. Si un tel ensemble de fixation peut être fixé sur la face arrière de l'appui tête indépendamment de la fabrication du siège, son caractère modulable reste insuffisant.

La publication US2005092801 décrit un ensemble de fixation d'après le préambule de la revendication 1, permettant d'agencer un module sur un élément de liaison monté dans une rainure ménagée dans un flanc d'assemblage. La publication US2005133557 décrit un ensemble de fixation comportant une unité de montage universelle comprenant une rainure de réception d'un module, par exemple de stockage. Le caractère modulable de ces dispositifs est également insuffisant.

### RESUME DE L'INVENTION

Dans ce contexte, l'invention vise en premier lieu un ensemble de fixation pour tout type de mobilier qui assure une modularité autant à l'ensemble en lui-même qu'aux modules destinés à être montés sur l'ensemble de fixation.

L'invention vise en outre un siège muni sur sa face arrière, et plus particulièrement sur la face arrière de son appui-tête, d'un tel ensemble de fixation.

L'invention vise enfin un ensemble de deux sièges adjacents munis chacun d'un ensemble de fixation en assurant un caractère modulable pour l'ensemble des deux éléments de fixation.

A cet effet, l'ensemble de fixation de l'invention comporte au moins une rainure ménagée dans l'épaisseur d'un flanc d'assemblage apte à former l'enveloppe externe d'un mobilier, et au moins un élément de liaison qui est amoviblement monté dans ladite rainure et qui comporte au moins une pièce d'accroche apte à coopérer avec un module à fixer sur ledit ensemble de fixation. L'élément de liaison est un organe longiligne, par exemple une réglette, qui est longitudinalement monté dans ladite rainure.

L'ensemble de fixation de l'invention peut également comporter les caractéristiques optionnelles suivantes considérées isolément ou selon toutes les combinaisons techniques possibles :
- les bords longitudinaux de la rainure sont recourbés en formant moyen de maintien de l'élément de liaison dans ladite rainure.
- au moins une extrémité de la rainure débouche du flanc d'assemblage en formant point d'insertion de l'élément de liaison dans la rainure et point de retrait dudit élément de liaison de la rainure.
- l'élément de liaison s'étend sur toute la longueur de la rainure.
- la pièce d'accroche présente la forme d'un pion ou d'un évidement.
- la pièce d'accroche est magnétique et apte à coopérer avec un module à fixer également magnétique.
- l'ensemble de fixation comporte au moins deux rainures parallèles.

Un autre aspect de l'invention concerne un mobilier qui comporte un ensemble de fixation tel que précédemment énoncé et dans lequel la ou les rainures sont ménagées dans l'épaisseur de son enveloppe externe.

Un autre aspect de l'invention concerne un siège de transport de voyageurs comportant un ensemble de fixation tel que précédemment énoncé qui est agencé au niveau de sa face arrière.

Le siège de transport de voyageurs de l'invention peut également comporter les caractéristiques optionnelles suivantes considérées isolément ou selon toutes les combinaisons techniques possibles :
- l'ensemble de fixation est agencé au niveau de la face arrière de son appui-tête.
- l'ensemble de fixation comporte au moins deux rainures dans chacune desquelles est monté un élément de liaison dont au moins une pièce d'accroche coopère dans son agencement avec une pièce d'accroche de l'élément de liaison de l'autre rainure en rendant les deux éléments de liaison aptes à soutenir un même module.
- la pièce d'accroche de la première rainure et la pièce d'accroche de l'autre rainure sont magnétiques en rendant les deux éléments de liaison aptes à soutenir un même module également magnétique.
- les rainures sont agencées verticalement.
- le flanc d'assemblage est une sur-coque fixée sur la face arrière du dit siège.

Un autre aspect de l'invention concerne un ensemble de deux sièges adjacents de transport de voyageurs tels que précédemment définis pour lequel ensemble au moins une pièce d'accroche d'un l'élément de liaison de l'ensemble de fixation d'un premier siège coopère dans son agencement avec au moins une pièce d'accroche d'un élément de liaison de l'ensemble de fixation du second siège adjacent en rendant ces deux éléments de liaison aptes à soutenir un même module qui s'étend entre les deux sièges.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence aux figures annexées, qui illustrent :
[Fig. 1] Figure 1 : une représentation schématique en perspective d'un ensemble de fixation de l'invention monté sur la face arrière d'un appui tête de siège de véhicule de transport ferroviaire de voyageurs.
[Fig. 2] Figure 2 : une représentation schématique de la face arrière d'une première conception de deux sièges adjacents de véhicule de transport ferroviaire de voyageurs équipés chacun d'un ensemble de fixation selon l'invention.
[Fig. 3] Figure 3 : une représentation schématique de la face arrière d'une seconde conception de deux sièges adjacents de véhicule de transport ferroviaire de voyageurs équipés chacun d'un ensemble de fixation selon l'invention.

### DESCRIPTION DETAILLEE

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent des variantes de l'invention mais qu'il peut exister d'autres modes de réalisation qui répondent à la définition de l'invention. En particulier, les figures et les exemples ci-après décrits portent sur un ensemble de fixation monté sur la face arrière d'un appui tête de siège de véhicule de transport ferroviaire de voyageurs, mais peut trouver application sur tout type de mobilier.

L'ensemble de fixation de l'invention consiste essentiellement en au moins une rainure qui est réalisée dans l'épaisseur de l'enveloppe externe d'origine ou rapportée d'un mobilier, et d'au moins un élément de liaison, par exemple sous forme d'un organe longiligne de type réglette, qui est logée dans la rainure et comporte au moins une pièce d'accroche de modules interchangeables présentant une forme de pion ou d'évidement. Préférentiellement, l'ensemble de fixation comporte plusieurs rainures parallèles, chacune recevant un élément de liaison.

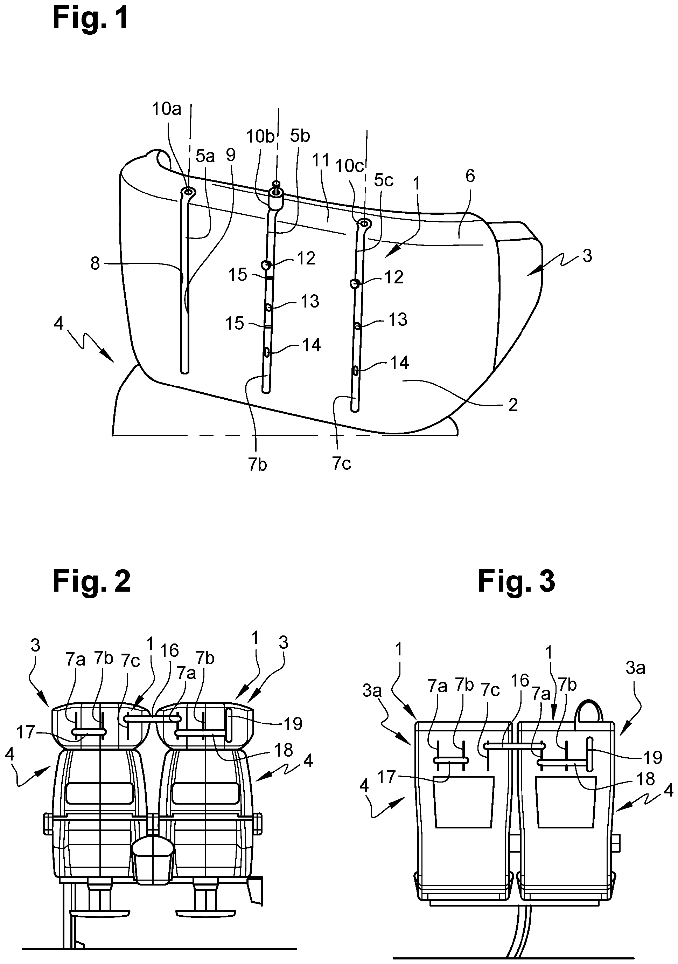

En référence à la figure 1 et selon une variante de réalisation de l'invention, l'ensemble de fixation 1 est monté sur la face arrière 2 d'un appui-tête 3 de siège de véhicule ferroviaire 4 de transport de voyageurs formant flanc d'assemblage 2. L'ensemble de fixation 1 comprend trois rainures verticales parallèles 5a,5b,5c qui sont régulièrement réparties sur la largeur de la face arrière 2 de l'appui-tête 3 et qui sont réalisées dans l'épaisseur de la face arrière 2, ici matérialisée par une coque 6.

Dans chaque rainure 5a,5b,5c, un élément de liaison 7b,7c sous forme de réglette (l'élément de liaison de la rainure 5a n'est pas représenté pour une meilleure visualisation de la rainure 5a) s'étend sur toute la longueur de la rainure associée 5b,5c. Le maintien de l'élément de liaison 7b,7c dans la rainure 5b,5c est assuré par les bords longitudinaux 8,9 de la rainure 5a,5b,5c qui sont recourbés l'un vers l'autre.

Chaque rainure 5a,5b,5c présente une extrémité supérieure débouchante 10a,10b,10c de la face arrière 2 de l'appui tête 3 au niveau d'un décroché 11 de la face arrière 2. Chaque extrémité débouchante 10a,10b,10c forme ainsi point d'insertion d'un élément de liaison 7a,7b,7c dans sa rainure associée 5a,5b,5c et point de retrait d'un élément de liaison 7a,7b,7c de sa rainure associée 5a,5b,5c.

Des moyens de verrouillage et de retrait peuvent être prévus pour contrôler l'accès à l'ensemble de la rainure.

Chaque élément de liaison 7a,7b,7c comporte une pluralité de pièces d'accroche de modules. Les pièces d'accroche prennent la forme de pions 12, d'évidement circulaire 13, d'évidement vertical 14 et encore d'évidement horizontal 15. Ces pièces d'accroche 12,13,14,15 sont destinées à coopérer avec une pièce d'accroche complémentaire de module non représenté sur cette figure.

Alternativement, les pièces d'accroche peuvent être magnétiques et ainsi aptes à coopérer avec une pièce d'accroche complémentaire de module également magnétique. Dans cette hypothèse, les pièces d'accroche peuvent prendre toute forme connue de l'homme du métier.

Comme visible sur la figure 1 (en considérant que l'élément de liaison central 7b est totalement inséré dans la rainure 5b), les pièces d'accroche de deux éléments de liaison adjacents 7b,7c peuvent être de même nature (par exemple un pion) et agencés horizontalement l'un par rapport à l'autre pour pouvoir supporter un même module, par exemple une tablette ou barre de réception d'équipement électronique.

En référence aux figures 2 et 3, on peut également prévoir que les pièces d'accroche des éléments de liaison 7a,7b,7c de deux sièges adjacents 4 coopèrent pour agencer un même module 16, par exemple une tablette 16, entre les deux sièges et ce, quel que soit la configuration des appui-têtes 3,3a illustrées dans leurs différences aux figures 2 et 3.

L'élément de fixation de l'invention offre une grande modularité dans l'agencement des modules. Sur les figures 2 et 3, sont illustrés, outre le module 16 entre les deux sièges 4, un premier module horizontal 17 monté sur l'élément de fixation 1 du siège de gauche 4 au moyen de deux pièces d'accroche non visibles respectivement de deux éléments de liaison 7a,7b adjacents, un second module horizontal 18 monté sur l'élément de fixation 1 du siège de droite 4 au moyen de trois pièces d'accroche non visibles respectivement des trois éléments de liaison 7a,7b,7c, et un module vertical 19 monté sur plusieurs pièces d'accroche d'un même élément de liaison non visible 7c de l'élément de fixation 1 du siège de droite 4.

La modularité s'inscrit également dans la position basse et haute des modules puisque selon l'agencement des pièces d'accroche, il est possible de positionner des modules en partie basse de l'élément de fixation (modules 17,18) ou en partie haute (16). Bien que non représenté, des modules peuvent également être agencés en partie intermédiaire.

La modularité s'inscrit en outre dans la nature des modules. On prévoir comme précédemment décrit des tablettes ou barres de fixation, mais également un porte gobelet ou tout autre élément assurant le maintien ou le rangement d'objet de la vie courante.

Restant dans le cadre de l'invention, on peut prévoir que parmi une pluralité de rainures verticales 5a,5b,5c d'un ensemble de fixation 1, l'élément de liaison d'une rainure ou plus soit dépourvu de pièce d'accroche.

En plus de la modularité précédemment décrite, l'élément de fixation de l'invention 1 est facilement remplaçable en tout ou partie, en cas de détérioration ou d'adaptation. En effet, si une pièce d'accroche est défectueuse, il suffit de remplacer l'élément de liaison associé par un nouvel élément de liaison. Également, si de nouveaux modules sont disponibles et munis de pièces d'accroche nécessitant des pièces d'accroche de l'élément de liaison différentes des existantes, il suffit également de remplacer le ou les éléments de liaison concernés.

Enfin, l'ensemble de fixation de l'invention 1 peut être facilement monté sur la face arrière de siège ou d'un appui tête existant. Pour ce faire, l'ensemble de fixation 1 peut être réalisé dans l'épaisseur d'une sur-coque non représentée sur les figures, qui est solidarisée à un cadre fixé à l'intérieur de la coque (6) existante, elle-même fixée sur la face arrière (2) dudit siège (4). Ledit cadre est recouvert par le revêtement du siège (4) afin de ne pas être visible par les usagers. La sur-coque est solidarisée au cadre en venant prendre en « sandwich » la coque (6) existante.

## Revendications

1. Ensemble de fixation comportant au moins une rainure (5a,5b,5c) ménagée dans l'épaisseur d'un flanc d'assemblage (2) apte à former l'enveloppe externe d'un mobilier (4,3), et au moins un élément de liaison (7a,7b,7c) qui est amoviblement monté dans ladite rainure (5a,5b,5c) et qui comporte au moins une pièce de d'accroche (12,13,14,15) apte à coopérer avec un module à fixer sur ledit ensemble de fixation (1), **caractérisé en ce que** l'élément de liaison (7a,7b,7c) est un organe longiligne qui est longitudinalement monté dans la rainure (5a,5b,5c)

2. Ensemble de fixation selon la revendication précédente, **caractérisé en ce que** les bords longitudinaux (8,9) de la rainure (5a,5b,5c) sont recourbés en formant moyen de maintien de l'élément de liaison (7a,7b,7c) dans ladite rainure (5a,5b,5c).

3. Ensemble de fixation selon l'une quelconque des revendications précédentes, **caractérisé en ce qu'**au moins une extrémité (10a,10,10c) de la rainure (5a,5b,5c) débouche du flanc d'assemblage (2) en formant point d'insertion de l'élément de liaison (7a,7b,7c) dans la rainure (5a,5b,5c) et point de retrait dudit élément de liaison (7a,7b,7c) de la rainure (5a,5b,5c).

4. Ensemble de fixation selon l'une quelconque des revendications précédentes, **caractérisé en ce que** la pièce d'accroche (12,13,14,15) présente la forme d'un pion (12) ou d'un évidement (13,14,15).

5. Ensemble de fixation selon l'une quelconque des revendications précédentes, **caractérisé en ce que** la pièce d'accroche (12,13,14,15) est magnétique et apte à coopérer avec un module à fixer également magnétique

6. Ensemble de fixation selon l'une quelconque des revendications précédentes, **caractérisé en ce qu'**il comporte au moins deux rainures parallèles (5a,5b,5c).

7. Mobilier comportant un ensemble de fixation selon l'une quelconque des revendications précédentes et dans lequel la ou les rainures (5a,5b,5c) sont ménagées dans l'épaisseur de son enveloppe externe (2).

8. Siège de transport de voyageurs comportant un ensemble de fixation selon l'une quelconque des revendications 1 à 6 qui est agencé au niveau de sa face arrière.

9. Siège de transport de voyageurs selon la revendication précédente, **caractérisé en ce que** l'ensemble de fixation (1) est agencé au niveau de la face arrière (2) de son appui-tête (3).

10. Siège de transport de voyageurs selon la revendication précédente, **caractérisé en ce que** l'ensemble de fixation (1) comporte au moins deux rainures (5a,5b,5c) dans chacune desquelles est monté un élément de liaison (7a,7b,7c) dont au moins une pièce d'accroche (12,13,14,15) coopère dans son agencement avec une pièce d'accroche (12,13,14,15) de l'élément de liaison (7a,7b,7c) de l'autre rainure (5a,5b,5c) en rendant les deux éléments de liaison (7a,7b,7c) aptes à soutenir un même module (17,18).

11. Siège de transport de voyageurs selon la revendication 10, **caractérisé en ce que** la pièce d'accroche (12,13,14,15) de la première rainure (5a,5b,5c) et la pièce d'accroche (12,13,14,15) de l'autre rainure (5a,5b,5c) sont magnétiques en rendant les deux éléments de liaison (7a,7b,7c) aptes à soutenir un même module (17,18) également magnétique.

12. Siège de transport de voyageurs selon l'une quelconque des revendications 8 à 11, **caractérisé en ce que** le flanc d'assemblage (2) est une sur-coque fixée la face arrière (2) du dit siège (4).

13. Ensemble de deux sièges adjacents de transport de voyageurs selon l'une quelconque des revendications 8 à 12, **caractérisé en ce qu'**au moins une pièce d'accroche (12,13,14,15) d'un l'élément de liaison (7a,7b,7c) de l'ensemble de fixation (1) d'un premier siège (4) coopère dans son agencement avec au moins une pièce d'accroche (12,13,14,15) d'un élément de liaison (7a,7b,7c) de l'ensemble de fixation (1) du second siège adjacent (4) en rendant ces deux éléments de liaison (7a,7b,7c) aptes à soutenir un même module (16) qui s'étend entre les deux sièges (4).

## Patentansprüche

1. Befestigungsanordnung, umfassend mindestens eine Nut (5a, 5b, 5c), die in der Dicke einer Verbindungsflanke (2) ausgebildet ist, die dazu geeignet ist, die Außenhülle eines Möbelstücks (4, 3) zu bilden, und mindestens ein Verbindungselement (7a, 7b, 7c), das abnehmbar in der Nut (5a, 5b, 5c) montiert ist und mindestens ein Einhängeteil (12, 13, 14, 15) aufweist, das dazu geeignet ist, mit einem an der Befestigungsanordnung (1) zu befestigenden Modul zusammenzuwirken, **dadurch gekennzeichnet, dass** das Verbindungselement (7a, 7b, 7c) ein längliches Organ ist, das in Längsrichtung in der Nut (5a, 5b, 5c) montiert ist.

2. Befestigungsanordnung nach dem vorangehenden Anspruch, **dadurch gekennzeichnet, dass** die Längsränder (8, 9) der Nut (5a, 5b, 5c) gebogen sind, wobei sie ein Mittel zum Halten des Verbindungselements (7a, 7b, 7c) in der Nut (5a, 5b, 5c) bilden.

3. Befestigungsanordnung nach einem der vorangehenden Ansprüche, **dadurch gekennzeichnet, dass** mindestens ein Ende (10a, 10, 10c) der Nut (5a, 5b, 5c) aus der Verbindungsflanke (2) herausragt, wobei es einen Punkt zum Einsetzen des Verbindungselements (7a, 7b, 7c) in die Nut (5a, 5b, 5c) und einen Punkt zum Herausziehen des Verbindungselements (7a, 7b, 7c) aus der Nut (5a, 5b, 5c) bildet.

4. Befestigungsanordnung nach einem der vorangehenden Ansprüche, **dadurch gekennzeichnet, dass** das Einhängeteil (12, 13, 14, 15) die Form eines Stifts (12) oder einer Aussparung (13, 14, 15) aufweist.

5. Befestigungsanordnung nach einem der vorangehenden Ansprüche, **dadurch gekennzeichnet, dass** das Einhängeteil (12, 13, 14, 15) magnetisch und dazu geeignet ist, mit einem zu befestigenden Modul, das ebenfalls magnetisch ist, zusammenzuwirken.

6. Befestigungsanordnung nach einem der vorangehenden Ansprüche, **dadurch gekennzeichnet, dass** sie mindestens zwei parallele Nuten (5a, 5b, 5c) aufweist.

7. Möbelstück, umfassend eine Befestigungsanordnung nach einem der vorangehenden Ansprüche, wobei die Nut(en) (5a, 5b, 5c) in der Dicke seiner Außenhülle (2) ausgebildet ist (sind).

8. Sitz zur Beförderung von Passagieren, umfassend eine Befestigungsanordnung nach einem der Ansprüche 1 bis 6, die an seiner Rückseite angeordnet ist.

9. Sitz zur Beförderung von Passagieren nach dem vorangehenden Anspruch, **dadurch gekennzeichnet, dass** die Befestigungsanordnung (1) an der Rückseite (2) seiner Kopfstütze (3) angeordnet ist.

10. Sitz zur Beförderung von Passagieren nach dem vorangehenden Anspruch, **dadurch gekennzeichnet, dass** die Befestigungsanordnung (1) mindestens zwei Nuten (5a, 5b, 5c) aufweist, in denen jeweils ein Verbindungselement (7a, 7b, 7c) montiert ist, von dem mindestens ein Einhängeteil (12, 13, 14, 15) in seiner Anordnung mit einem Einhängeteil (12, 13, 14, 15) des Verbindungselements (7a, 7b, 7c) der anderen Nut (5a, 5b, 5c) zusammenwirkt, wobei die beiden Verbindungselemente (7a, 7b, 7c) in die Lage versetzt werden, ein und dasselbe Modul (17, 18) zu stützen.

11. Sitz zur Beförderung von Passagieren nach Anspruch 10, **dadurch gekennzeichnet, dass** das Einhängeteil (12, 13, 14, 15) der ersten Nut (5a, 5b, 5c) und das Einhängeteil (12, 13, 14, 15) der anderen Nut (5a, 5b, 5c) magnetisch sind, wobei sie die beiden Verbindungselemente (7a, 7b, 7c) in die Lage versetzen, ein und dasselbe Modul (17, 18) das ebenfalls magnetisch ist, zu stützen.

12. Sitz zur Beförderung von Passagieren nach einem der Ansprüche 8 bis 11, **dadurch gekennzeichnet, dass** die Verbindungsflanke (2) eine Überschale ist, die an der Rückseite (2) des Sitzes (4) befestigt ist.

13. Anordnung von zwei benachbarten Sitzen zur Beförderung von Passagieren nach einem der Ansprüche 8 bis 12, **dadurch gekennzeichnet, dass** mindestens ein Einhängeteil (12, 13, 14, 15) eines Verbindungselements (7a, 7b, 7c) der Befestigungsanordnung (1) eines ersten Sitzes (4) in seiner Anordnung mit mindestens einem Einhängeteil (12, 13, 14, 15) eines Verbindungselements (7a, 7b, 7c) der Befestigungsanordnung (1) des zweiten benachbarten Sitzes (4) zusammenwirkt, wobei diese beiden Verbindungselemente (7a, 7b, 7c) in die Lage versetzt werden, ein und dasselbe Modul (16), das sich zwischen den beiden Sitzen (4) erstreckt, zu stützen.

## Claims

1. Fastening assembly comprising at least one groove (5a, 5b, 5c) formed in the thickness of an assembly flank (2) able to form the outer casing of a furniture item (4, 3), and at least one connection element (7a, 7b, 7c) which is removably mounted in said groove (5a, 5b, 5c) and which comprises at least one coupling part (12, 13, 14, 15) able to cooperate with a module to be fastened to said fastening assembly (1), wherein the connection element (7a, 7b, 7c) is an elongate member which is longitudinally mounted in the groove (5a, 5b, 5c).

2. Fastening assembly according to the preceding claim, wherein the longitudinal edges (8, 9) of the groove (5a, 5b, 5c) are curved so as to form a means for holding the connection element (7a, 7b, 7c) in said groove (5a, 5b, 5c).

3. Fastening assembly according to either one of the preceding claims, wherein at least one end (10a, 10, 10c) of the groove (5a, 5b, 5c) emerges from the assembly flank (2) so as to form a point for inserting the connection element (7a, 7b, 7c) into the groove (5a, 5b, 5c) and a point for removing said connection element (7a, 7b, 7c) from the groove (5a, 5b, 5c).

4. Fastening assembly according to any one of the preceding claims, wherein the coupling part (12, 13, 14, 15) has the form of a pin (12) or of a cutout (13, 14, 15) .

5. Fastening assembly according to any one of the preceding claims, wherein the coupling part (12, 13, 14, 15) is magnetic and able to cooperate with a likewise magnetic module to be fastened.

6. Fastening assembly according to any one of the preceding claims, wherein it comprises at least two parallel grooves (5a, 5b, 5c).

7. Furniture item comprising a fastening assembly according to any one of the preceding claims and wherein the groove (s) (5a, 5b, 5c) is or are formed in the thickness of the outer casing (2) thereof.

8. Passenger transport seat comprising a fastening assembly according to any one of Claims 1 to 6 that is arranged in the rear face thereof.

9. Passenger transport seat according to the preceding claim, wherein the fastening assembly (1) is arranged in the rear face (2) of the headrest (3) thereof.

10. Passenger transport seat according to the preceding claim, wherein the fastening assembly (1) comprises at least two grooves (5a, 5b, 5c) in each of which is mounted a connection element (7a, 7b, 7c) of which at least one coupling part (12, 13, 14, 15) cooperates in its arrangement with a coupling part (12, 13, 14, 15) of the connection element (7a, 7b, 7c) of the other groove (5a, 5b, 5c), thereby making the two connection elements (7a, 7b, 7c) able to support one and the same module (17, 18).

11. Passenger transport seat according to Claim 10, wherein the coupling part (12, 13, 14, 15) of the first groove (5a, 5b, 5c) and the coupling part (12, 13, 14, 15) of the other groove (5a, 5b, 5c) are magnetic, thereby making the two connection elements (7a, 7b, 7c) able to support one and the same likewise magnetic module (17, 18) .

12. Passenger transport seat according to any one of Claims 8 to 11, wherein the assembly flank (2) is an overshell fastened to the rear face (2) of said seat (4).

13. Assembly of two adjacent passenger transport seats according to any one of Claims 8 to 12, wherein at least one coupling part (12, 13, 14, 15) of a connection element (7a, 7b, 7c) of the fastening assembly (1) of a first seat (4) cooperates in its arrangement with at least one coupling part (12, 13, 14, 15) of a connection element (7a, 7b, 7c) of the fastening assembly (1) of the second adjacent seat (4), thereby making these two connection elements (7a, 7b, 7c) able to support one and the same module (16) extending between the two seats (4).
